# EUROPÄISCHE PATENTSCHRIFT

(11) **EP 3 375 665 B1**
(45) Veröffentlichungstag und Bekanntmachung des Hinweises auf die Patenterteilung: **25.11.2020**
(21) Anmeldenummer: 18159674.3
(22) Anmeldetag: 02.03.2018
(51) Int. Cl.: B60R 1/06

(54) **ABKLAPPVORRICHTUNG FÜR EIN SPIEGELERSATZSYSTEM**
FOLDING DEVICE FOR A MIRROR REPLACEMENT SYSTEM
DISPOSITIF DE RABATTEMENT POUR UN SYSTÈME DE REMPLACEMENT DE RÉTROVISEUR

(30) Priorität: 16.03.2017 DE 102017002578
(43) Veröffentlichungstag der Anmeldung: 19.09.2018
(73) Patentinhaber: MAN Truck & Bus SE, 80995 München (DE)
(72) Erfinder: Rohrmüller, Hans, 82216 Maisach (DE); Schönegger-Fösleitner, Erich, 8933 St. Gallen (AT); Schippling, Marc, 81245 München (DE)
(74) Vertreter: v. Bezold & Partner Patentanwälte - PartG mbB

(56) Entgegenhaltungen:
- DE-A1- 2 432 707
- DE-A1- 3 440 477
- DE-A1- 19 758 293
- DE-B3-102012 015 395
- JP-A- S 611 551

## Beschreibung

Die Erfindung betrifft eine Vorrichtung zum Abklappen einer Kamera an einem Kraftfahrzeug, insbesondere eine Abklappvorrichtung für ein Spiegelersatzsystem eines Kraftfahrzeugs. Die Erfindung betrifft ferner ein Kraftfahrzeug mit einer Vorrichtung zum Abklappen einer Kamera.

Aus dem Stand der Technik sind Außenrückspiegel mit reflektierenden Spiegelscheiben bekannt, die bei einem Anprall auf ein Hindernis ausweichen können. Derartige Systeme sind bspw. in der DE 24 32 707 A1, der DE 197 58 293 A1, der JP S61 1551 A und der DE 34 40 477 A1 offenbart.

Die zur Abdeckung indirekter Sichtfelder verwendeten Rückspiegelsysteme werden zunehmend durch Kamera-/Displaysysteme abgelöst. Die erforderlichen Kameras müssen in einem gewissen seitlichen Abstand und/oder vor dem Fahrzeug angeordnet werden, um die erforderlichen Sichtbereiche abdecken zu können. Hierdurch ergeben sich Kameraarme, die eine beachtliche Dimension erreichen können.

Aufgrund der erforderlichen exponierten Lage, die oftmals nicht vorhandenen Einsehbereiche vom Fahrer aus und der vorhandenen Beschädigungsgefahr durch Kontakt mit anderen Objekten sollten die Kameraarme vorteilhafterweise mit einem Abklappmechanismus versehen sein. Der Abklappmechanismus ermöglicht das Abklappen des Kameraarms bei Auftreffen auf ein Hindernis.

Die DE 10 2012 015 385 B3 offenbart beispielsweise einen Abklappmechanismus. Ein Kameraarm für ein Spiegelersatzsystem eines Kraftfahrzeugs enthält ein erstes Gehäuseelement und ein zweites Gehäuseelement. Das erste Gehäuseelement nimmt eine Bildaufnahmeeinheit auf. Das zweite Gehäuseelement ist angepasst, lagefest mit der Karosserie des Kraftfahrzeugs verbunden zu werden. Zwischen dem ersten Gehäuseelement und dem zweiten Gehäuseelement ist ein Schwenkmechanismus vorgesehen, sodass das erste Gehäuseelement relativ zum zweiten Gehäuseelement um eine Schwenkachse schwenkbar ist.

Aus der US 5,027,200 A ist eine Kameraeinheit bekannt, die an ein Nutzfahrzeug seitlich angebracht werden kann. Die Kameraeinheit kann mittels eines Ein- und Ausfahrmechanismus translatorisch in eine Ausnehmung im Gehäuse eingezogen oder davon ausgefahren werden. Ferner kann die die Kameraanordnung zwei Schwenkmechanismen zum Verschenken der Kamera während des Betriebs aufweisen. So kann die Kamera im Betrieb um eine horizontale Achse und um eine Vertikalachse geschwenkt werden. Die Vorrichtung ist jedoch nicht zum Abklappen geeignet. Die Vorrichtung kann die Auslegerlänge, d. h. den Abstand zum Fahrzeug, nicht verändern, sodass die Gehäuseteile nicht zueinander relativ geklappt werden können.

Abklappvorrichtungen bedingen geometrische Einschränkungen auf die zueinander schwenkbaren Bauteile, d. h. den Kameraarm und den Kamerafuß. Die Folge sind Bauteilgeometrien, die gewisse Schwenkfreiräume berücksichtigen müssen, dadurch aerodynamisch ungünstige Einflüsse aufweisen und hinsichtlich des Designs einschränkenden Zwängen unterliegen.

Es ist somit eine Aufgabe der Erfindung, eine verbesserte Abklappvorrichtung vorzusehen. Insbesondere besteht eine weitere Aufgabe der Erfindung darin, eine Abklappvorrichtung vorzusehen, die den Schwenkfreiraum so vorsieht, dass dem Gesamtsystem ermöglicht wird, weitestgehend frei wählbare und geschlossene Geometrien eines Kameraarms und eines Kamerafußes bis an die Fahrzeugkarosserieaußenkontur zu gestalten.

Diese Aufgaben werden durch eine Vorrichtung zum Abklappen einer Kamera mit den Merkmalen des unabhängigen Anspruchs gelöst. Vorteilhafte Ausführungsformen und Anwendungen der Erfindung ergeben sich aus den abhängigen Ansprüchen.

Die Vorrichtung zum Abklappen einer Kamera an einem Kraftfahrzeug zum Schutz der Vorrichtung bei einer Kollision mit einem Hindernis ist insbesondere eine Abklappvorrichtung für ein Spiegelersatzsystem eines Kraftfahrzeugs. Die Vorrichtung weist ein erstes Gehäuseelement, insbesondere einen Kameraarm, auf, in dem die Kamera aufgenommen oder aufnehmbar ist. Die Vorrichtung weist ein zweites Gehäuseelement, insbesondere einen Kamerafuß, auf, das dazu ausgebildet ist, lagefest mit dem Kraftfahrzeug (einer Karosserie des Kraftfahrzeug) verbunden zu werden. Das erste Gehäuseelement und das zweite Gehäuseelement sind schwenkbar miteinander über eine erste Schwenkverbindung, die eine erste Drehachse definiert, verbunden. Zusätzlich sind das erste Gehäuseelement und das zweite Gehäuseelement über eine zweite Schwenkverbindung, die eine zweite Drehachse definiert, schwenkbar miteinander verbunden. Die erste und die zweite Drehachse sind voneinander beabstandet.

Das Vorsehen mehrerer Drehachsen ermöglicht einen weiten Schwenkbereich des ersten Gehäuseelements, sodass dieses gegenüber einem auftreffenden Körper weit weggeklappt werden kann. Dieser Vorteil kann noch dadurch gesteigert werden, dass die beiden Drehachsen möglichst dicht an der Karosserie des Fahrzeugs angeordnet werden. Das erste Gehäuseelement und das zweite Gehäuseelement können zudem aufgrund des Vorsehens zweier Schwenkverbindungen flexibler konstruiert werden. Dies kann insbesondere vorteilhaft beim Ausführen einer aerodynamischen Außenhülle der Vorrichtung sein.

Hierin bezieht sich der Ausdruck "Vorrichtung zum Abklappen" oder "Abklappvorrichtung" auf eine Vorrichtung, die eine Auslegerlänge der Vorrichtung, d. h. einen Abstand zur Fahrzeugkarosserie, zwischen einer Betriebsstellung und einer Abklappstellung verändert. Damit kann die Vorrichtung bei einer Kollision mit einem Hindernis oder präventiv vor einer Kollision mit einem Hindernis in eine Abklappstellung gebracht werden, um dem Hindernis durch Verringerung der Auslegerlänge auszuweichen. Insbesondere beziehen sich die Ausdrücke nicht auf Vorrichtungen, die zum Verschwenken der Kamera während des Betriebs zum Verändern des Sichtfelds der Kamera vorgesehen sind.

Die erste Schwenkverbindung und/oder die zweite Schwenkverbindung können beispielsweise als drehbar gelagerte Drehzapfen oder Drehstangen ausgebildet sein.

In dem ersten Gehäuseelement können auch mehrere Kameras zur Überwachung mehrerer Bereiche aufgenommen sein.

Vorteilhafterweise ist die erste Drehachse im Wesentlichen parallel zu der zweiten Drehachse.

Hierin bedeutet der Ausdruck "im Wesentlichen" bezüglich der parallelen Anordnung der ersten Drehachse und der zweiten Drehachse, dass die erste Drehachse und die zweite Drehachse einen Winkel kleiner als 10°, insbesondere kleiner als 5°, vorzugsweise kleiner als 2,5° einschließen oder parallel zueinander verlaufen. Bei einer windschiefen Anordnung bedeutet der Ausdruck, dass eine erste Ebene senkrecht zu der ersten Drehachse und eine zweite Ebene senkrecht zu der zweiten Drehachse einen Winkel kleiner als 10°, insbesondere kleiner als 5°, vorzugsweise kleiner als 2,5° einschließen oder parallel verlaufen.

In einer Ausführungsform ist das erste Gehäuseelement relativ zu dem zweiten Gehäuseelement aus einer Betriebsstellung für die Kamera heraus in eine erste Richtung zu einer ersten Abklappstellung und/oder in eine zweite Richtung zu einer zweiten Abklappstellung schwenkbar. Die zweite Richtung ist insbesondere entgegengesetzt zu der ersten Richtung. Dies ermöglicht, dass die Vorrichtung wahlweise nach vorne oder nach hinten geschwenkt werden kann.

In einer Ausführungsvariante sind das erste Gehäuseelement und das zweite Gehäuseelement so miteinander verbunden, dass das erste Gehäuseelement aus einer Zwischenstellung zwischen der Betriebsstellung und der ersten Abklappstellung zum Einnehmen der Betriebsstellung oder der ersten Abklappstellung beaufschlagt wird. Alternativ oder zusätzlich sind das erste Gehäuseelement und das zweite Gehäuseelement so miteinander verbunden, dass das erste Gehäuseelement aus einer Zwischenstellung zwischen der Betriebsstellung und der zweiten Abklappstellung zum Einnehmen der Betriebsstellung oder der zweiten Abklappstellung beaufschlagt wird.

Mit anderen Worten gesagt, kann bspw. eine Kraft auf die Gehäuseelemente derart wirken, dass lediglich die Betriebsstellung und die Abklappstellungen stabile Stellungen für das erste Gehäuseelement sind. Aus einer Zwischenposition zwischen den Abklappstellungen und der Betriebsstellung wird sich das erste Gehäuseelement selbsttätig bspw. unter Einfluss einer Kraft zu einer der stabilen Stellungen bewegen.

In einem besonders bevorzugten Ausführungsbeispiel sind das erste Gehäuseelement und das zweite Gehäuseelement miteinander über mindestens eine Übertotpunktlagerung verbunden. Die Übertotpunktlagerung kann so vorgesehen sein, dass (nur) die Betriebsstellung für die Kamera und die Abklappstellungen stabile Stellungen für das erste Gehäuseelement sind.

Die Übertotpunktlagerung und die Beaufschlagung des ersten Gehäuseelements in der Zwischenstellung zum Einnehmen einer stabilen Stellung verhindert, dass das erste Gehäuseelement bei nur geringer Krafteinwirkung abklappt, zum Beispiel bei Gegenwind während der Fahrt des Kraftfahrzeugs.

Erfindungsgemäß weist die Vorrichtung ferner ein Zwischenglied auf. Das erste Gehäuseelement und das Zwischenglied sind schwenkbar miteinander über die erste Schwenkverbindung verbunden. Alternativ oder zusätzlich sind das zweite Gehäuseelement und das Zwischenglied schwenkbar miteinander über die zweite Schwenkverbindung verbunden.

Das Zwischenglied kann so ausgebildet und mit dem ersten Gehäuseelement und dem zweiten Element verbunden sein, dass das Zwischenglied beim Schwenken des ersten Gehäuseelements aus der Betriebsstellung für die Kamera zu der ersten Abklappstellung mitschwenkt und/oder beim Schwenken des ersten Gehäuseelements aus der Betriebsstellung für die Kamera zu der zweiten Abklappstellung nicht mitschwenkt.

Erfindungsgemäß weist das erste Gehäuseelement einen ersten Verbindungsbereich auf. Der erste Verbindungsbereich ist über die erste Schwenkverbindung mit dem Zwischenglied verbunden. Das Zwischenglied weist ein erstes Führungselement, insbesondere eine erste Führungshülse, auf. Das Führungselement stützt sich an einer ersten Führungskontur des ersten Verbindungsbereichs ab.

Alternativ oder zusätzlich weist das zweite Gehäuseelement erfindungsgemäß einen zweiten Verbindungsbereich auf, der über die zweite Schwenkverbindung mit dem Zwischenglied verbunden ist. Das Zwischenglied weist ein zweites Führungselement, insbesondere eine zweite Führungshülse, auf, das sich an einer zweiten Führungskontur des zweiten Verbindungsbereichs abstützt.

Durch die sich an einer Führungskontur abstützenden Führungselemente kann der erste Gehäusebereich zwischen der Betriebsstellung und Abklappstellung geführt verschwenkt werden.

In einer weiteren Ausführungsform ist das erste Führungselement und/oder das zweite Führungselement verschiebbar, insbesondere translatorisch verschiebbar, gelagert. Die verschiebbare Lagerung ermöglicht dem jeweiligen Führungselement, sich an der jeweiligen Führungskontur des Verbindungsbereichs abzustützen und dieser beim Verschwenken zu folgen.

Das erste Führungselement und/oder das zweite Führungselement können beispielsweise in einer Kammer in dem Zwischenglied verschiebbar gelagert sein. Zusätzlich können das erste Führungselement und das zweite Führungselement an gegenüberliegenden Enden aus der Kammer zum Kontaktieren der Führungskontur herausstehen.

Das Zwischenglied kann aus einem ersten Bereich und einem zweiten Bereich aufgebaut sein. Der erste Bereich kann fest mit dem zweiten Bereich verbunden sein. Der erste Bereich kann über die erste Schwenkverbindung mit dem ersten Gehäuseelement, insbesondere dem ersten Verbindungsbereich, verbunden sein. Der erste Bereich kann über die zweite Schwenkverbindung mit dem zweiten Gehäuseelement, insbesondere dem zweiten Verbindungsbereich, verbunden sein. Der zweite Bereich kann das erste Führungselement, das zweite Führungselement, und/oder die Kammer aufweisen.

In einem weiteren Ausführungsbeispiel weist das Zwischenglied ein elastisches Bauteil, insbesondere eine Druckfeder, auf. Das elastische Bauteil beaufschlagt das erste Führungselement zum Abstützen an der ersten Führungskontur. Alternativ oder zusätzlich beaufschlagt das elastische Bauteil das zweite Führungselement zum Abstützen an der zweiten Führungskontur. Alternativ oder ergänzend stützt das elastische Bauteil das erste Führungselement und das zweite Führungselement gegeneinander ab.

Das elastische Bauteil kann beispielsweise in der Kammer des Zwischenglieds zwischen dem ersten Führungselement und dem zweiten Führungselement angeordnet sein. Vorteilhafterweise sind die erste Führungskontur und das erste Führungselement so ausgebildet, dass das erste Gehäuseelement und das Zwischenglied zwischen zwei Schwenkpositionen über eine Übertotpunktlagerung zueinander verschwenkbar sind. Alternativ oder ergänzend sind die zweite Führungskontur und das zweite Führungselement so ausgebildet, dass das zweite Gehäuseelement und das Zwischenglied zwischen zwei Schwenkpositionen über eine Übertotpunktlagerung zueinander verschwenkbar sind. Werden die stabilen Schwenkpositionen der Übertotpunktlagerung beispielsweise als die Abklappstellung(en) und die Betriebsstellung für die Kamera ausgebildet, so können diese Position besonders einfach eingenommen werden. So kann das erste Gehäuseelement beispielsweise bei einer Berührung direkt in eine Abklappstellung abklappen, um einen größeren Schaden zu verhindern. Aus einer Abklappstellung heraus kann das erste Gehäuseelement zudem auf einfache Weise über die Übertotpunktlagerung in die Betriebsstellung zurückgeführt werden. Die Übertotpunktlagerung verhindert zudem, dass das erste Gehäuseelement bei nur geringer Krafteinwirkung abklappt, zum Beispiel bei Gegenwind während der Fahrt des Kraftfahrzeugs.

In einer weiteren Ausführungsvariante stützt sich das erste Führungselement gleitend oder über eine Rolle an der ersten Führungskontur ab. Alternativ oder zusätzlich stützt sich das zweite Führungselement gleitend oder über eine Rolle an der zweiten Führungskontur ab. Je nach Anwendungsfall stehen somit zuverlässige Mechanismen zum Abstützen des Führungselements zur Verfügung.

In einem besonders bevorzugten Ausführungsbeispiel liegen eine Außenhülle des ersten Gehäuseelements und eine Außenhülle des zweiten Gehäuseelements in einer Betriebsstellung des ersten Gehäuseelements für die Kamera bündig aneinander an.

Mit anderen Worten gesagt, können eine Außenkante einer ersten Außenhülle des ersten Gehäuseelements und eine Außenkante einer zweiten Außenhülle des zweiten Gehäuseelements entlang einer geraden oder gekrümmten Kurve aneinander anliegen, wenn das erste Gehäuseelement relativ zu dem zweiten Gehäuseelement in einer Betriebsstellung für die Kamera ist.

Dies hat den Vorteil, dass in der Betriebsstellung eine geschlossene Geometrie von dem ersten Gehäuseelement und dem zweiten Gehäuseelement gebildet wird. Dies kann insbesondere aus aerodynamischen und ästhetischen Beweggründen bevorzugt sein.

In einer weiteren Ausführungsform weist die Vorrichtung zudem eine Antriebseinheit, zum Beispiel einen Elektromotor, zum automatischen Verschwenken des ersten Gehäuseelements relativ zu dem zweiten Gehäuseelement auf.

Die Antriebseinheit kann von einem Fahrer des Kraftfahrzeugs zum Abklappen und Zurüccklappen des ersten Gehäuseelements verwendet werden, wenn dieser beispielsweise beim Rangieren die Auslegerlänge der Vorrichtung verringern möchte, um beispielsweise ein Hindernis zu umgehen.

Die Antriebseinheit kann in dem ersten Gehäuseelement und/oder dem zweiten Gehäuseelement angeordnet sein. Alternativ oder zusätzlich kann die Antriebseinheit mit der ersten Schwenkverbindung und/oder mit der zweiten Schwenkverbindung verbunden sein.

Vorzugsweise weist die Vorrichtung ferner mindestens ein Stoßfängerelement auf. Das Stoßfängerelement ist an dem ersten und/oder zweiten Gehäuseelement zum Schutz der Vorrichtung bei einer Kollision, insbesondere zum Schutz der Kamera und des ersten Gehäuseelements, lösbar angebracht. Das Stoßfängerelement kann sich elastisch und/oder plastisch verformen. Das Stoßfängerelement kann einen Elastomerbereich aufweisen. Bei einer Kollision kann sich das Stoßfängerelement auch lösen, wobei trotzdem ein Abklappen des ersten Gehäuseelements ausgelöst wird. Damit kann eine Beschädigung des ersten Gehäuseelements und insbesondere der Kamera verhindert werden. Ein neues oder repariertes Stoßfängerelement kann dann durch die lösbare Anbringung auf einfache Weise wieder an dem ersten Gehäuseelement angebracht werden. Das Stoßfängerelement kann auch als ein Verschleißteil konzipiert sein.

Die Erfindung betrifft ferner ein Kraftfahrzeug, insbesondere ein Nutzfahrzeug, das die Vorrichtung wie hierin offenbart aufweist. Die Vorrichtung kann beispielsweise an einer Außenlängsseite einer Fahrzeugkarosserie lagefest angebracht sein. Insbesondere kann die Vorrichtung an einer Außenlängsseite eines Führerhauses der Fahrzeugkarosserie lagefest angebracht sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

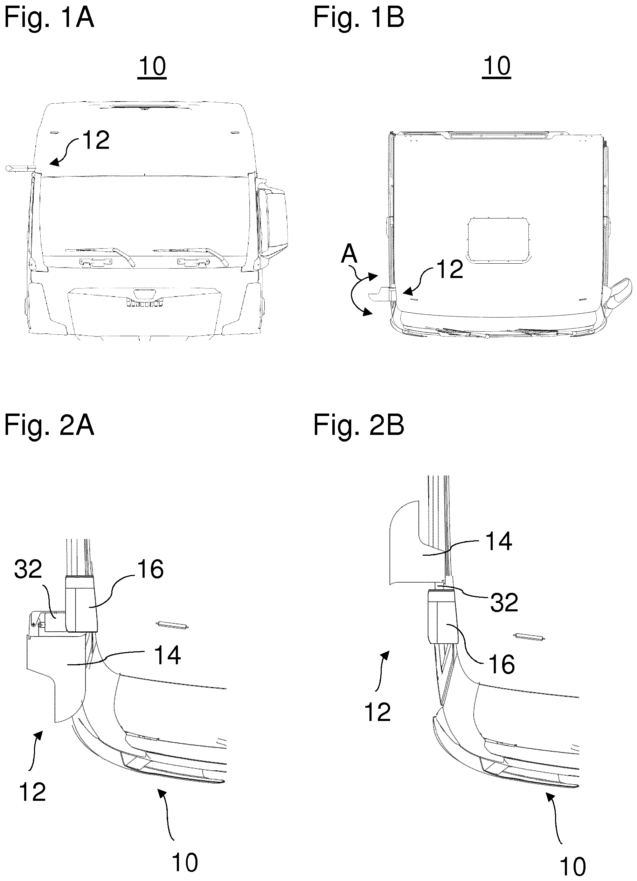

- Figur 1A: eine Vorderansicht eines Bereichs eines Nutzfahrzeugs;
- Figur 1: B eine Draufsicht auf ein Dach eines Nutzfahrzeugs;
- Figur 2A: eine Draufsicht auf eine Abklappvorrichtung in einer ersten Abklappstellung;
- Figur 2B: eine Draufsicht auf die Abklappvorrichtung in einer zweiten Abklappstellung;
- Figur 3A: eine Vorderansicht der Abklappvorrichtung in einer Betriebsstellung für eine in der Abklappvorrichtung aufgenommene Kamera;
- Figur 3B: eine Schnittansicht durch die Abklappvorrichtung entlang der Linie X-X in Figur 3A;
- Figur 4: eine Detailansicht eines Zwischenglieds der Abklappvorrichtung;
- Figur 5A: eine Vorderansicht der Abklappvorrichtung in einer Zwischenstellung auf dem Weg zwischen der Betriebsstellung und der ersten Abklappstellung;
- Figur 5B: eine Schnittansicht ohne Schraffuren durch die Abklappvorrichtung entlang der Linie Y-Y in Figur 5A;
- Figur 6A: eine Vorderansicht der Abklappvorrichtung in einer Zwischenstellung auf dem Weg zwischen der Betriebsstellung und der zweiten Abklappstellung;
- Figur 6B: eine Schnittansicht ohne Schraffuren durch die Abklappvorrichtung entlang der Linie Z-Z in Figur 6A; und
- Figur 7: eine schematische Darstellung einer weiteren Ausführungsform der Abklappvorrichtung.

Die Figuren 1A und 1B zeigen einen vorderen Bereich eines Fahrzeugs 10. An der Fahrerseite (hier die in Fahrtrichtung linke Seite) ist das Fahrzeug 10 mit einem Spiegelsystem ausgestattet. Auf der Beifahrerseite ist das Fahrzeug 10 mit einem in einer Abklappvorrichtung 12 vorgesehenen Spiegelersatzsystem ausgestattet. Die Abklappvorrichtung 12 ist lagefest an der Karosserie des Fahrzeugs 10, insbesondere am Fahrerhaus des Fahrzeugs 10, angebracht.

In der Figur 1B ist die Abklappvorrichtung 12 in einer Betriebsstellung für die in der Abklappvorrichtung 12 aufgenommene Kamera positioniert. Aus dieser Stellung heraus kann die Abklappvorrichtung 12 entlang des Doppelpfeils A bezüglich der Fahrtrichtung des Fahrzeugs 10 nach vorne und nach hinten geschwenkt werden. Der Abklappvorgang kann selbsttätig erfolgen, zum Beispiel bei einer Kollision mit Bauteilen anderer Verkehrsteilnehmer oder mit statischen Behinderungen im Fahrzeugumfeld wie beispielsweise Toreinfahrten, Mauervorsprünge, Verkehrszeichen usw.. Der Abklappvorgang kann zudem vom Fahrzeugpersonal durchgeführt werden, um beispielsweise bevorstehenden Hindernissen ausweichen.

Die Figuren 2A und 2B zeigen die Abklappvorrichtung 12 in einer vorderen, ersten Abklappstellung (Figur 2A) und einer hinteren, zweiten Abklappstellung (Figur 2B). In der gezeigten Ausführungsform weist die Abklappvorrichtung 12 einen Kameraarm in Form eines ersten Gehäuseelements 14 auf. Die Abklappvorrichtung 12 weist zudem einen Kamerafuß in Form eines zweiten Gehäuseelements 16 auf. Das erste Gehäuseelement 14 ist über ein Zwischenglied 32 mit dem zweiten Gehäuseelement 16 schwenkbar verbunden. Das zweite Gehäuseelement 16 ist lagefest an der Karosserie des Fahrzeugs 10 befestigt. Das Zwischenglied 32 ist teilweise innerhalb des zweiten Gehäuseelements 16 aufgenommen.

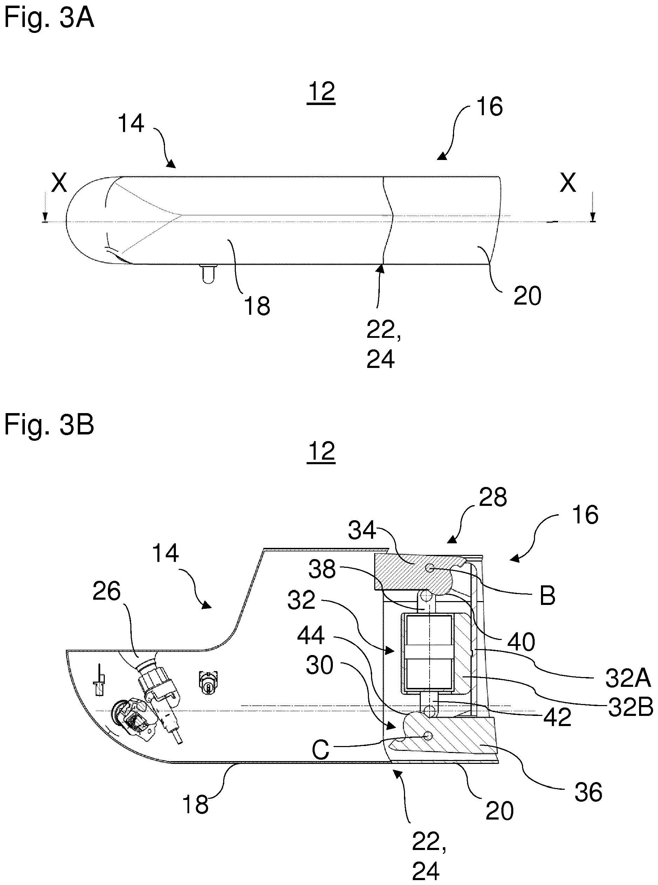

In der Figur 3A ist die Abklappvorrichtung 12 in einer Fahrtrichtung des Fahrzeugs von vorne dargestellt. Die Abklappvorrichtung 12 (das erste Gehäuseelement 14) befindet sich in der Betriebsstellung für die Kamera. Das erste Gehäuseelement 14 weist eine Außenhülle 18 auf. Das zweite Gehäuseelement 16 weist eine Außenhülle 20 auf. In der Betriebsstellung liegen die Außenhülle 18 des ersten Gehäuseelements 14 und die Außenhülle 20 des zweiten Gehäuseelements 16 bündig aneinander an. Im Einzelnen berühren sich eine Außenkante 24 der Außenhülle 18 des ersten Gehäuseelements 14 und eine Außenkante 22 der Außenhülle 20 des zweiten Gehäuseelements 16. Die Berührung zwischen der Außenkante 22 und der Außenkante 24 findet entlang einer gebogenen Kurve statt. Diese Anordnung und Ausbildung der Außenhüllen 18, 20 führt zu einer geschlossenen Geometrie der Abklappvorrichtung 12 in der Betriebsstellung. Dies ist insbesondere unter aerodynamischen und gestalterischen Aspekten von Vorteil.

Die Figur 3B zeigt die Abklappvorrichtung 12 in einer Schnittansicht entlang der Linie X-X in Figur 3A. Die Abklappvorrichtung 12 weist das erste Gehäuseelement 14, das Zwischenglied 32 und das zweite Gehäuseelement 20 auf. In dem ersten Gehäuseelement 14 ist die Kamera 26 angeordnet und auf den oder die gewünschten Bereiche gerichtet. In einigen Ausführungsformen können auch mehrere Kameras in dem ersten Gehäuseelement 14 angeordnet sein.

Wie in den Figuren 3A und 3B dargestellt ist, ist das Zwischenglied 32 vollständig innerhalb der Außenhülle 20 des zweiten Gehäuseelements 16 positioniert, wenn das zweite Gehäuseelement 14 in der Betriebsstellung für die Kamera 26 ist.

Das erste Gehäuseelement 14 weist einen ersten Verbindungsbereich 34 auf. Das zweite Gehäuseelement 16 weist einen zweiten Verbindungsbereich 36 auf. Der erste Verbindungsbereich 34 ist über eine erste Schwenkverbindung 28 und eine zweite Schwenkverbindung 30 mit dem zweiten Verbindungsbereich 36 verbunden. Im Einzelnen verbindet die erste Schwenkverbindung 28 den ersten Verbindungsbereich 34 mit einem ersten Bereich 32A des Zwischenglieds 32. Die erste Schwenkverbindung 28 definiert die erste Drehachse B. Der erste Verbindungsbereich 38 und der erste Bereich 32A des Zwischenglieds 32 können zueinander um die Drehachse B verschwenkt werden. Die zweite Schwenkverbindung 30 verbindet den ersten Bereich 32A mit dem zweiten Verbindungsbereich 36. Die zweite Schwenkverbindung 30 definiert die zweite Drehachse C. Die erste Drehachse B ist parallel zu der zweiten Drehachse C. Der erste Bereich 32A (das Zwischenglied 32) kann bezüglich des zweiten Verbindungsbauteils 36 um die zweite Drehachse C verschwenkt werden. Die erste Schwenkverbindung 28 und die zweite Schwenkverbindung 30 können beispielsweise als drehbar gelagerte Drehzapfen oder Drehstangen ausgebildet sein.

Das Zwischenglied 32 weist zudem einen zweiten Bereich 32B auf. Der erste Bereich 32A und der zweite Bereich 32B sind aneinander befestigt. In anderen Ausführungsformen können der erste Bereich 32A und der zweite Bereich 32B beispielsweise als integrale Bereiche eines aus einem Teil hergestellten Zwischenglieds 32 sein.

In dem zweiten Bereich 32B ist eine Kammer (ein Hohlraum) vorgesehen. In dem Hohlraum sind ein erstes Führungselement 38 und ein zweites Führungselement 42 verschiebbar angeordnet. Das erste Führungselement 38 ragt teilweise aus einem Gehäuseabschnitt des zweiten Bereichs 32B des Zwischenglieds 32 heraus. Eine Verschiebung des ersten Führungselements 38 in der Kammer des zweiten Bereichs 32B verändert die Länge des herausragenden Abschnitts des ersten Führungselements 38. Das zweite Führungselement 42 ragt bezüglich des ersten Führungselements 38 an einer gegenüberliegenden Seite teilweise aus dem Gehäuseabschnitt des zweiten Bereichs 32B des Zwischenglieds 32 heraus. Die Länge des herausragenden Abschnitts des zweiten Führungselements 42 variiert ebenfalls mit einer Verschiebung des zweiten Führungselements 42 in der Kammer des zweiten Bereichs 32B.

Der erste Verbindungsbereich 34 weist eine erste Führungskontur 40 und der zweite Verbindungsbereich 36 weist eine zweite Führungskontur 44 auf. Das erste Gehäuseelement 14 stützt sich über die erste Führungskontur 40 und das erste Führungselement 38 an dem Zwischenglied 32 ab. Das Zwischenglied 32 stützt sich über das zweite Führungselement 42 und die zweite Führungskontur 44 an dem zweiten Gehäuseelement 16 ab. Folglich stützt sich das erste Gehäuseelement 14 über das Zwischenglied 32 an dem zweiten Gehäuseelement 16 ab.

Während dem Verschwenken des ersten Gehäuseelements 14 relativ zu dem zweiten Gehäuseelement 16 in eine erste Richtung wird insbesondere das erste Führungselement 38 entlang der ersten Führungskontur 40 geführt. Während dem Verschwenken des ersten Gehäuseelements 14 relativ zu dem zweiten Gehäuseelement 16 in eine zweite Richtung, die der ersten Richtung entgegengesetzt ist, wird insbesondere das zweite Führungselement 42 entlang der zweiten Führungskontur 44 geführt.

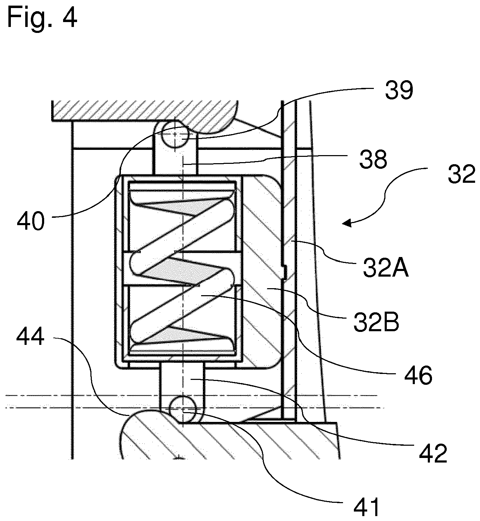

Die Figur 4 zeigt das Zwischenglied 32 in größerem Detail. Das erste Führungselement 38 ist als eine Führungshülse mit einem Hülsenabschnitt in der Kammer des zweiten Bereichs 32B des Zwischenglieds 32 angeordnet. Das zweite Führungselement 42 ist als eine Führungshülse mit einem Hülsenabschnitt in der Kammer des zweiten Bereichs 32B des Zwischenglieds 32 angeordnet.

Ein elastisches Element 46 in Form einer Druckfeder stützt das erste Führungselement 38 und das zweite Führungselement 42 gegeneinander ab. Das elastische Element 46 ist in der Kammer des zweiten Bereichs 32B des Zwischenglieds 32 angeordnet. Das elastische Element 46 erstreckt sich teilweise in die Hülsenabschnitte des ersten Führungselements 38 und des zweiten Führungselements 42.

Das elastische Element 46 beaufschlagt das erste Führungselement 38 zur Anlage an der ersten Führungskontur 40. Gleichermaßen beaufschlagt das elastische Element 46 das zweite Führungselement 42 zur Anlage an der zweiten Führungskontur 44. Das erste Führungselement 38 kann über eine Rolle 39 an der ersten Führungskontur 40 abrollen. Das zweite Führungselement 42 kann ebenfalls über eine Rolle 41 an der zweiten Führungskontur 44 abrollen. In anderen Ausführungsformen können die Führungselemente mit Gleitelementen o.ä. vorgesehen sein, sodass sie an den Führungskonturen langgleiten können.

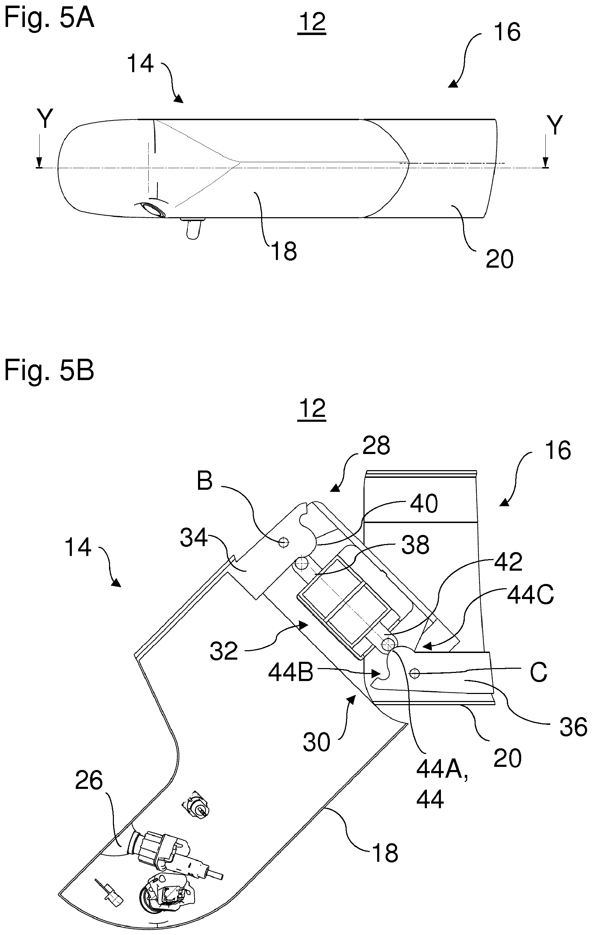

Die Figuren 5A und 5B zeigen die Abklappvorrichtung 12 in einer Zwischenstellung auf dem Weg zu der vorderen Abklappstellung (vgl. Figur 2A). Im Einzelnen schwenkt das erste Gehäuseelement 14 zusammen mit dem Zwischenglied 32 um die zweite Drehachse C. Gleichzeitig rollt das zweite Führungselement 42 an der zweiten Führungskontur 44 ab. Das zweite Führungselement 42 wird hierbei zunächst durch die zweite Führungskontur 44 gegen die Federkraft der Druckfeder 46 (vgl. Figur 4) in Richtung zu dem ersten Führungselement 38 in dem Zwischenglied 32 bewegt. Nach Überwindung eines Maximums 44A der zweiten Führungskontur 44 bewegt sich das zweite Führungselement 42 wieder in die entgegengesetzte Richtung (fährt aus). Letztlich erreicht die Rolle des zweiten Führungselements 42 eine Aufnahme 44B. Hier befindet sich das zweite Gehäuseelement 14 in der vorderen Abklappstellung. Das beschriebene Zusammenwirken zwischen der zweiten Führungskontur 44 und der Verschiebung des zweiten Führungselements 42 wirkt als eine Übertotpunktlagerung. Hierbei sind für die Positionierung des zweiten Führungselements 42 relativ zu der zweiten Führungskontur 44 lediglich zwei stabile Stellungen vorgesehen. Die erste stabile Stellung wird eingenommen, wenn sich die Rolle des zweiten Führungselements 42 in einer Aufnahme 44C der zweiten Führungskontur 44 befindet. Hier ist das erste Gehäuseelement 14 in der Betriebsstellung für die Kamera 26 (vgl. Figur 3B). Die zweite stabile Stellung wird eingenommen, wenn sich die Rolle des zweiten Führungselements 42 in der Aufnahme 44B befindet. Hier ist das erste Gehäuseelement 14 in der vorderen Abklappstellung. An allen Zwischenstellungen zwischen diesen beiden stabilen Stellungen wird die zweite Führungshülse 42 aufgrund der Form der zweiten Führungskontur 44 und der Beaufschlagung durch das elastische Bauteil 46 (vgl. Figur 4) dazu gebracht, selbsttätig eine der beiden stabilen Positionen einzunehmen.

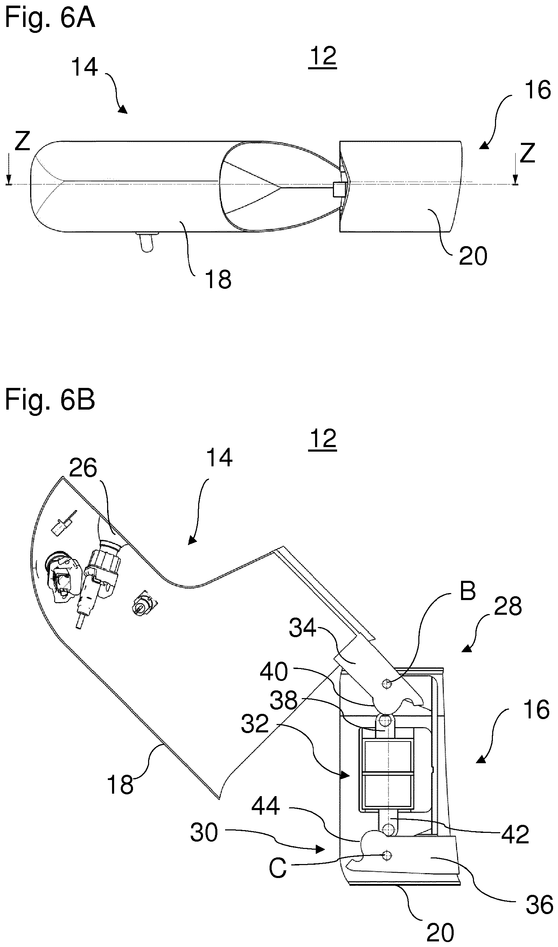

Die Figuren 6A und 6B zeigen die Abklappvorrichtung 12 in einer Zwischenstellung auf dem Weg zu der hinteren Abklappstellung (vgl. Figur 2B). Im Einzelnen schwenkt das erste Gehäuseelement 14 um die Drehachse B, ohne dass das Zwischenglied 32 sich mitbewegt. Die Konfiguration der ersten Führungskontur 40 und des ersten Führungselements 38 ist analog zu der der zweiten Führungskontur 44 und des zweiten Führungselements 42. Insbesondere wirken auch die erste Führungskontur 40 und das erste Führungselement 38 als eine Übertotpunktlagerung zusammen, sodass das erste Gehäuseelement 14 lediglich zwei stabile Stellungen einnehmen kann. Hierbei handelt es sich um die Betriebsstellung für die Kamera 26 und um die hintere Abklappstellung (vgl. Figur 2B).

Fachleute werden verstehen, dass die Führungselemente 38 und 42 so gestaltet werden können, dass sie nur den für die Übertotpunktlagerung erforderlichen Weg freigegeben. Die Führungskonturen 40 und 44 können zudem so gestaltet sein, dass sie in den Abklappstellungen (vgl. Figuren 2A und 2B) für die Druckfeder 46 (vgl. Figur 4) weniger Entspannungsweg freigegeben als in der Betriebsstellung für die Kamera 26. D. h., in den Abklappstellungen ist die Druckfeder 46 stärker komprimiert als in der Betriebsstellung. Somit kann verhindert werden, dass beim Rückklappen aus den Abklappstellungen der Abklappvorgang in die jeweils andere Richtung ausgelöst wird, da sich in diesem Fall die Führungselemente 38 und 42 vorzeitig aneinander abstützen.

In anderen Ausführungsformen kann die Anordnung und Konfiguration des Zwischenglieds 32 auch so vorgesehen werden, dass sich das Zwischenglied 32 beim Abklappen in die hintere Abklappstellung mitbewegt, während sich das Zwischenglied 32 beim Abklappen in die vordere Abklappstellung nicht mitbewegt.

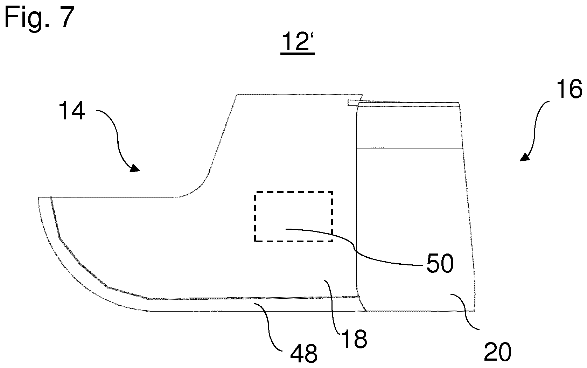

Die Figur 7 zeigt eine weitere Ausgestaltung der Abklappvorrichtung. Hier ist Abklappvorrichtung mit dem Bezugszeichen 12' bezeichnet. Die Abklappvorrichtung 12' kann ähnlich zu der zuvor beschriebenen Abklappvorrichtung 12 ausgestaltet sein. Zusätzlich kann die Abklappvorrichtung 12' ein Stoßfängerelement 48 und/oder eine Antriebseinheit 50 aufweisen.

Das Stoßfängerelement 48 kann insbesondere an dem ersten Gehäuseelement 14 lösbar angebracht sein. Bei Kollision mit Hindernissen kann das Stoßfängerelement 48 verhindern, dass wichtige Bauteile des ersten Gehäuseelements 14, wie beispielsweise eine oder mehrere Kameras, beschädigt werden. Bei Auftreffen auf ein Hindernis bewirkt das Stoßfängerelement 48 unter plastischer oder elastischer Verformung ein Abklappen des ersten Gehäuseelements 14. Das Stoßfängerelement 48 kann in Fahrtrichtung des Fahrzeugs 10 gesehen beispielsweise an einer vorderen Seite des ersten Gehäuseelements 14 und/oder an einer hinteren Seite des ersten Gehäuseelements 14 positioniert sein. Bei Beschädigung kann das Stoßfängerelement 48 durch seine lösbare Anbringung an dem ersten Gehäuseelement 14 auf einfache Weise ausgetauscht werden.

Die Antriebseinheit 50 kann dazu ausgebildet sein, das erste Gehäuseelement 14 bezüglich des zweiten Gehäuseelements 16 automatisch zu verschwenken. Die Antriebseinheit 50 kann zumindest teilweise in dem ersten Gehäuseelement 14 und/oder dem zweiten Gehäuseelement 16 aufgenommen sein. Die Antriebseinheit 50 kann beispielsweise ein Elektromotor sein. Die Antriebseinheit 50 ermöglicht es dem Fahrpersonal, das erste Gehäuseelement 14 zum Umgehen von Hindernissen automatisch zu verschwenken.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- A: Schwenkrichtung
- B: Erste Drehachse
- C: Zweite Drehachse
- 10: Fahrzeug
- 12: Abklappvorrichtung
- 14: Erstes Gehäuseelement (Kameraarm)
- 16: Zweites Gehäuseelement (Kamerafuß)
- 18: Außenhülle
- 20: Außenhülle
- 22: Außenkante
- 24: Außenkante
- 26: Kamera
- 28: Erste Schwenkverbindung
- 30: zweite Schwenkverbindung
- 32: Zwischenglied
- 32A: Erster Bereich
- 32B: Zweiter Bereich
- 34: Erster Verbindungsbereich
- 36: zweiter Verbindungsbereich
- 38: Erstes Führungselement
- 39: Erste Rolle
- 40: Erste Führungskontur
- 41: Zweite Rolle
- 42: Zweites Führungselement
- 44: Zweite Führungskontur
- 44A: Aufnahme
- 44B: Maximum
- 44C: Aufnahme
- 46: Elastisches Bauteil
- 48: Stoßfängerelement
- 50: Antriebseinheit

## Patentansprüche

1. Vorrichtung (12) zum Abklappen einer Kamera (26) an einem Kraftfahrzeug (10) zum Schutz der Vorrichtung (12) bei einer Kollision mit einem Hindernis, insbesondere Abklappvorrichtung für ein Spiegelersatzsystem eines Kraftfahrzeugs (10), aufweisend:
ein erstes Gehäuseelement (14), in dem die Kamera (26) aufgenommen ist;
ein zweites Gehäuseelement (16), das dazu ausgebildet ist, lagefest mit dem Kraftfahrzeug (10) verbunden zu werden; und
ein Zwischenglied (32), wobei das erste Gehäuseelement (14) und das Zwischenglied (32) schwenkbar miteinander über eine erste Schwenkverbindung (28) verbunden sind und/oder das zweite Gehäuseelement (16) und das Zwischenglied (32) schwenkbar miteinander über eine zweite Schwenkverbindung (30) verbunden sind;
wobei das erste Gehäuseelement (14) und das zweite Gehäuseelement (16) schwenkbar miteinander über die erste Schwenkverbindung (28), die eine erste Drehachse (B) definiert, und die zweite Schwenkverbindung (30), die eine zweite Drehachse (C), die von der ersten Drehachse (B) beabstandet ist, definiert, verbunden sind, **dadurch gekennzeichnet, dass**
das erste Gehäuseelement (14) einen ersten Verbindungsbereich (34) aufweist, der über die erste Schwenkverbindung (28) mit dem Zwischenglied (32) verbunden ist, und das Zwischenglied (32) ein erstes Führungselement (38), insbesondere eine erste Führungshülse, aufweist, das sich an einer ersten Führungskontur (40) des ersten Verbindungsbereichs (34) abstützt; und/oder
das zweite Gehäuseelement (16) einen zweiten Verbindungsbereich (36) aufweist, der über die zweite Schwenkverbindung (30) mit dem Zwischenglied (32) verbunden ist, und das Zwischenglied (32) ein zweites Führungselement (42), insbesondere eine zweite Führungshülse, aufweist, das sich an einer zweiten Führungskontur (44) des zweiten Verbindungsbereichs (36) abstützt.

2. Vorrichtung (12) nach Anspruch 1, wobei die erste Drehachse (B) im Wesentlichen parallel zu der zweiten Drehachse (B) ist.

3. Vorrichtung (12) nach Anspruch 1 oder Anspruch 2, wobei das erste Gehäuseelement (14) relativ zu dem zweiten Gehäuseelement (16) aus einer Betriebsstellung für die Kamera (26) heraus in eine erste Richtung zu einer ersten Abklappstellung und/oder in eine zweite Richtung zu einer zweiten Abklappstellung schwenkbar ist, wobei die zweite Richtung insbesondere entgegengesetzt zu der ersten Richtung ist.

4. Vorrichtung (12) nach Anspruch 3, wobei:
das erste Gehäuseelement (14) und das zweite Gehäuseelement (16) so miteinander verbunden sind, dass das erste Gehäuseelement (14) aus einer Zwischenstellung zwischen der Betriebsstellung und der ersten Abklappstellung zum Einnehmen der Betriebsstellung oder der ersten Abklappstellung beaufschlagt wird; und/oder
das erste Gehäuseelement (14) und das zweite Gehäuseelement (16) so miteinander verbunden sind, dass das erste Gehäuseelement (14) aus einer Zwischenstellung zwischen der Betriebsstellung und der zweiten Abklappstellung zum Einnehmen der Betriebsstellung oder der zweiten Abklappstellung beaufschlagt wird.

5. Vorrichtung (12) nach einem der vorherigen Ansprüche, wobei das erste Gehäuseelement (14) und das zweite Gehäuseelement (16) miteinander über mindestens eine Übertotpunktlagerung verbunden sind.

6. Vorrichtung (12) nach einem der vorherigen Ansprüche, wobei das erste Führungselement (38) und/oder das zweite Führungselement (42) verschiebbar, insbesondere translatorisch verschiebbar, gelagert ist.

7. Vorrichtung (12) nach einem der vorherigen Ansprüche, wobei das Zwischenglied (32) ein elastisches Bauteil (46), insbesondere eine Druckfeder, aufweist, das:
das erste Führungselement (38) zum Abstützen an der ersten Führungskontur (40) beaufschlagt; und/oder
das zweite Führungselement (42) zum Abstützen an der zweiten Führungskontur (44) beaufschlagt; und/oder
das erste Führungselement (38) und das zweite Führungselement (42) aneinander abstützt.

8. Vorrichtung (12) nach einem der vorherigen Ansprüche, wobei:
die erste Führungskontur (40) und das erste Führungselement (38) so ausgebildet sind, dass das erste Gehäuseelement (14) und das Zwischenglied (32) zwischen zwei Schwenkpositionen über eine Übertotpunktlagerung zueinander verschwenkbar sind; und/oder
die zweite Führungskontur (44) und das zweite Führungselement (42) so ausgebildet sind, dass das zweite Gehäuseelement (16) und das Zwischenglied (32) zwischen zwei Schwenkpositionen über eine Übertotpunktlagerung zueinander verschwenkbar sind.

9. Vorrichtung (12) nach einem der vorherigen Ansprüche, wobei sich das erste Führungselement (38) gleitend oder über eine Rolle (39) an der ersten Führungskontur (40) abstützt; und/oder
das zweite Führungselement (42) gleitend oder über eine Rolle (41) an der zweiten Führungskontur (44) abstützt.

10. Vorrichtung (12) nach einem der vorherigen Ansprüche, wobei eine Außenhülle (18) des ersten Gehäuseelements (14) und eine Außenhülle (20) des zweiten Gehäuseelements (16) in einer Betriebsstellung für die Kamera (26) bündig aneinander anliegen.

11. Vorrichtung (12) nach einem der vorherigen Ansprüche, ferner aufweisend eine Antriebseinheit (50), insbesondere ein Elektromotor, zum automatischen Verschwenken des ersten Gehäuseelements (14) relativ zu dem zweiten Gehäuseelement (16).

12. Vorrichtung (12) nach einem der vorherigen Ansprüche, wobei die Vorrichtung ferner mindestens ein Stoßfängerelement (48) aufweist, das an dem ersten und/oder zweiten Gehäuseelement (14, 16) zum Schutz der Vorrichtung (12) bei einer Kollision, insbesondere zum Schutz der Kamera (26) und des ersten Gehäuseelements (14), lösbar angebracht ist, wobei das Stoßfängerelement (48) insbesondere plastisch und/oder elastisch verformbar ist.

13. Kraftfahrzeug (10), insbesondere Nutzfahrzeug, aufweisend die Vorrichtung (12) nach einem der Ansprüche 1 bis 12.

## Claims

1. Device (12) for folding in a camera (26) on a motor vehicle (10) in order to protect the device (12) in the event of a collision with an obstacle, in particular folding-in device for a mirror replacement system of a motor vehicle (10), having:
a first housing element (14), in which the camera (26) is received;
a second housing element (16) which is constructed to be connected to the motor vehicle (10) in a positionally fixed manner; and
an intermediate member (32), wherein the first housing element (14) and the intermediate member (32) are pivotably connected to each other by means of a first pivot connection (28) and/or the second housing element (16) and the intermediate member (32) are pivotably connected to each other by means of a second pivot connection (30);
wherein the first housing element (14) and the second housing element (16) are pivotably connected to each other by means of the first pivot connection (28), which defines a first rotation axis (B), and the second pivot connection (30), which defines a second rotation axis (C) which is spaced apart from the first rotation axis (B),
**characterized in that**
the first housing element (14) has a first connection region (34) which is connected via the first pivot connection (28) to the intermediate member (32) and the intermediate member (32) has a first guiding element (38), in particular a first guiding sleeve, which is supported on a first guiding contour (40) of the first connection region (34); and/or
the second housing element (16) has a second connection region (36) which is connected via the second pivot connection (30) to the intermediate member (32) and the intermediate member (32) has a second guiding element (42), in particular a second guiding sleeve, which is supported on a second guiding contour (44) of the second connection region (36).

2. Device (12) according to Claim 1, wherein the first rotation axis (B) is substantially parallel with the second rotation axis (B).

3. Device (12) according to Claim 1 or Claim 2, wherein the first housing element (14) can be pivoted relative to the second housing element (16) out of an operating position for the camera (26) in a first direction to a first folded-in position and/or in a second direction to a second folded-in position, wherein the second direction is in particular counter to the first direction.

4. Device (12) according to Claim 3, wherein:
the first housing element (14) and the second housing element (16) are connected to each other in such a manner that the first housing element (14) is acted on from an intermediate position between the operating position and the first folded-in position in order to assume the operating position or the first folded-in position; and/or
the first housing element (14) and the second housing element (16) are connected to each other in such a manner that the first housing element (14) is acted on from an intermediate position between the operating position and the second folded-in position in order to assume the operating position or the second folded-in position.

5. Device (12) according to any one of the preceding claims, wherein the first housing element (14) and the second housing element (16) are connected to each other by means of at least one top dead centre bearing.

6. Device (12) according to any one of the preceding claims, wherein the first guiding element (38) and/or the second guiding element (42) is/are supported so as to be able to be displaced, in particular displaced in a translational manner.

7. Device (12) according to any one of the preceding claims, wherein the intermediate member (32) has a resilient component (46), in particular a pressure spring, which:
acts on the first guiding element (38) for support on the first guiding contour (40); and/or
acts on the second guiding element (42) for support on the second guiding contour (44); and/or
supports the first guiding element (38) and the second guiding element (42) on each other.

8. Device (12) according to any one of the preceding claims, wherein:
the first guiding contour (40) and the first guiding element (38) are constructed in such a manner that the first housing element (14) and the intermediate member (32) can be pivoted relative to each other between two pivot positions via a top dead centre bearing; and/or
the second guiding contour (44) and the second guiding element (42) are constructed in such a manner that the second housing element (16) and the intermediate member (32) can be pivoted relative to each other between two pivot positions via a top dead centre bearing.

9. Device (12) according to any one of the preceding claims, wherein the first guiding element (38) is supported in a sliding manner or via a roller (39) on the first guiding contour (40); and/or
the second guiding element (42) is supported in a sliding manner or via a roller (41) on the second guiding contour (44).

10. Device (12) according to any one of the preceding claims, wherein an outer shell (18) of the first housing element (14) and an outer shell (20) of the second housing element (16) are in abutment with each other in a flush manner in an operating position for the camera (26).

11. Device (12) according to any one of the preceding claims, further having a drive unit (50), in particular an electric motor, for automatically pivoting the first housing element (14) relative to the second housing element (16).

12. Device (12) according to any one of the preceding claims, wherein the device further has at least one bumper element (48) which is releasably fitted to the first and/or second housing element (14, 16) in order to protect the device (12) in the event of a collision, in particular to protect the camera (26) and the first housing element (14), wherein the bumper element (48) can in particular be plastically and/or resiliently deformed.

13. Motor vehicle (10), in particular utility vehicle, having the device (12) according to any one of Claims 1 to 12.

## Revendications

1. Dispositif (12) pour rabattre une caméra (26) au niveau d'un véhicule automobile (10) pour protéger le dispositif (12) en cas de collision avec un obstacle, en particulier dispositif de rabattement pour un système de remplacement de rétroviseur d'un véhicule automobile (10), présentant :
un premier élément de boîtier (14) dans lequel est reçue la caméra (26) ;
un deuxième élément de boîtier (16) qui est réalisé pour être connecté de manière fixée en position au véhicule automobile (10) ; et
un organe intermédiaire (32), le premier élément de boîtier (14) et l'organe intermédiaire (32) étant connectés de manière pivotante l'un à l'autre par le biais d'une première liaison pivotante (28) et/ou le deuxième élément de boîtier (16) et l'organe intermédiaire (32) étant connectés de manière pivotante l'un à l'autre par le biais d'une deuxième liaison pivotante (30) ;
le premier élément de boîtier (14) et le deuxième élément de boîtier (16) étant connectés de manière pivotante l'un à l'autre par le biais de la première liaison pivotante (28) qui définit un premier axe de rotation (B), et de la deuxième liaison pivotante (30) qui définit un deuxième axe de rotation (C) qui est espacé du premier axe de rotation (B),
**caractérisé en ce que**
le premier élément de boîtier (14) présente une première région de liaison (34) qui est connectée à l'organe intermédiaire (32) par le biais de la première liaison pivotante (28), et l'organe intermédiaire (32) présente un premier élément de guidage (38), en particulier une première douille de guidage qui s'appuie sur un premier contour de guidage (40) de la première région de liaison (34) ; et/ou
le deuxième élément de boîtier (16) présente une deuxième région de liaison (36) qui est connectée à l'organe intermédiaire (32) par le biais de la deuxième liaison pivotante (30), et l'organe intermédiaire (32) présente un deuxième élément de guidage (42), en particulier une deuxième douille de guidage, qui s'appuie sur un deuxième contour de guidage (44) de la deuxième région de liaison (36) .

2. Dispositif (12) selon la revendication 1, dans lequel le premier axe de rotation (B) est essentiellement parallèle au deuxième axe de rotation (B).

3. Dispositif (12) selon la revendication 1 ou la revendication 2, dans lequel le premier élément de boîtier (14) peut pivoter par rapport au deuxième élément de boîtier (16) hors d'une position fonctionnelle pour la caméra (26) dans une première direction vers une première position de rabattement et/ou dans une deuxième direction vers une deuxième position de rabattement, la deuxième direction étant en particulier opposée à la première direction.

4. Dispositif (12) selon la revendication 3, dans lequel :
le premier élément de boîtier (14) et le deuxième élément de boîtier (16) sont connectés l'un à l'autre de telle sorte que le premier élément de boîtier (14) soit sollicité hors d'une position intermédiaire entre la position fonctionnelle et la première position de rabattement afin d'adopter la position fonctionnelle ou la première position de rabattement ; et/ou
le premier élément de boîtier (14) et le deuxième élément de boîtier (16) sont connectés l'un à l'autre de telle sorte que le premier élément de boîtier (14) soit sollicité hors d'une position intermédiaire entre la position fonctionnelle et la deuxième position de rabattement afin d'adopter la position fonctionnelle ou la deuxième position de rabattement.

5. Dispositif (12) selon l'une quelconque des revendications précédentes, dans lequel le premier élément de boîtier (14) et le deuxième élément de boîtier (16) sont connectés l'un à l'autre par le biais d'au moins un support de point mort haut.

6. Dispositif (12) selon l'une quelconque des revendications précédentes, dans lequel le premier élément de guidage (38) et/ou le deuxième élément de guidage (42) sont supportés de manière déplaçable, notamment déplaçable en translation.

7. Dispositif (12) selon l'une quelconque des revendications précédentes, dans lequel l'organe intermédiaire (32) présente un composant élastique (46), en particulier un ressort de compression, qui :
sollicite le premier élément de guidage (38) de manière à ce qu'il s'appuie sur le premier contour de guidage (40) ; et/ou
sollicite le deuxième élément de guidage (42) de manière à ce qu'il s'appuie sur le deuxième contour de guidage (44) ; et/ou
supporte l'un contre l'autre le premier élément de guidage (38) et le deuxième élément de guidage (42) .

8. Dispositif (12) selon l'une quelconque des revendications précédentes, dans lequel :
le premier contour de guidage (40) et le premier élément de guidage (38) sont réalisés de telle sorte que le premier élément de boîtier (14) et l'organe intermédiaire (32) puissent pivoter l'un par rapport à l'autre entre deux positions de pivotement par le biais d'un support de point mort haut ; et/ou
le deuxième contour de guidage (44) et le deuxième élément de guidage (42) sont réalisés de telle sorte que le deuxième élément de boîtier (16) et l'organe intermédiaire (32) puissent pivoter l'un par rapport à l'autre entre deux positions de pivotement par le biais d'un support de point mort haut.

9. Dispositif (12) selon l'une quelconque des revendications précédentes, dans lequel le premier élément de guidage (38) s'appuie de manière glissante ou par le biais d'un rouleau (39) sur le premier contour de guidage (40) ; et/ou le deuxième élément de guidage (42) s'appuie de manière glissante ou par le biais d'un rouleau (41) sur le deuxième contour de guidage (44).

10. Dispositif (12) selon l'une quelconque des revendications précédentes, dans lequel une enveloppe extérieure (18) du premier élément de boîtier (14) et une enveloppe extérieure (20) du deuxième élément de boîtier (16) s'appliquent l'une contre l'autre en affleurement dans une position fonctionnelle pour la caméra (26).

11. Dispositif (12) selon l'une quelconque des revendications précédentes, présentant en outre une unité d'entraînement (50), en particulier un moteur électrique, pour faire pivoter automatiquement le premier élément de boîtier (14) par rapport au deuxième élément de boîtier (16).

12. Dispositif (12) selon l'une quelconque des revendications précédentes, le dispositif présentant en outre au moins un élément pare-chocs (48) qui est monté de manière amovible sur le premier et/ou sur le deuxième élément de boîtier (14, 16) pour protéger le dispositif (12) en cas de collision, en particulier pour protéger la caméra (26) et le premier élément de boîtier (14), l'élément pare-chocs (48) pouvant être déformé notamment plastiquement et/ou élastiquement.

13. Véhicule automobile (10), en particulier véhicule utilitaire présentant le dispositif (12) selon l'une quelconque des revendications 1 à 12.
